# EUROPÄISCHE PATENTSCHRIFT

(11) **EP 2 080 258 B1**
(45) Veröffentlichungstag und Bekanntmachung des Hinweises auf die Patenterteilung: **30.06.2010**
(21) Anmeldenummer: 07821365.9
(22) Anmeldetag: 16.10.2007
(51) Int. Cl.: H02K 5/128, H02K 9/19

(54) **GEKAPSELTE ELEKTRISCHE MASCHINE MIT FLÜSSIGKEITSGEKÜHLTEM STATOR**
ENCAPSULATED ELECTRICAL MACHINE WITH LIQUID-COOLED STATOR
MACHINE ELECTRIQUE BLINDEE AVEC UN STATOR REFROIDI PAR LIQUIDE

(30) Priorität: 19.10.2006 DE 102006049326
(43) Veröffentlichungstag der Anmeldung: 22.07.2009
(73) Patentinhaber: SIEMENS AKTIENGESELLSCHAFT, 80333 München (DE)
(72) Erfinder: BETHGE, Andreas, 13587 Berlin (DE); MÖHLE, Axel, 12163 Berlin (DE); OLBRICH, Irene, 13581 Berlin (DE); RISSE, Joachim, 13627 Berlin (DE); WALTER, Hartmut, 10961 Berlin (DE)
(86) Internationale Anmeldenummer: PCT/EP2007/060998
(87) Internationale Veröffentlichungsnummer: WO 2008/046817

(56) Entgegenhaltungen:
- WO-A-85/00475
- DE-C- 896 086
- US-A- 2 285 960
- US-A- 2 381 122
- US-A- 2 687 695
- US-A- 3 089 969

## Beschreibung

Die vorliegende Erfindung betrifft eine elektrische Maschine mit einem Stator, einem Rotor und einer Kapselung, die den Rotor gegenüber dem Stator dicht abkapselt.

Die in der Wicklung elektrischer Maschinen durch Verluste entstehende Wärme muss abgeführt werden. Üblicherweise wird dies durch Luftkühlung realisiert.

Bei so genannten integrierten Maschinen, d.h. Arbeits- und Antriebsmaschinen in einem Gehäuse, in denen der Rotor- und der Statorraum der elektrischen Antriebsmaschine durch eine Kapselung, z.B. ein Rohr, getrennt sind, erfolgt häufig eine Kühlung des Rotors durch das Prozessmedium. Ein entsprechender Spaltrohrmotor mit Folienspaltrohr ist aus der Druckschrift DE 100 25 190 A1 bekannt. Der für eine Kreiselpumpe dienende Spaltrohrmotor ist mit einem Spaltrohr ausgestattet, das den als Nassläufer ausgebildeten und mit der Motorwelle drehfest verbundenen Rotor von dem drehfest mit dem Motorgehäuse verbundenen Stator trennt. Das Spaltrohr ist durch eine flüssigkeitsundurchlässige Folie gebildet, und es sind Stützelemente vorgesehen, die die Folie halten und tragen.

Darüber hinaus offenbart die Druckschrift DE 15 28 805 A eine stopfbuchslose Pumpe für hohe Drücke mit in einem druckfesten Gehäuse untergebrachtem Spaltrohrmotor, bei der zum Druckausgleich am Spaltrohr der Rotorraum mit dem Inneren eines federnden Balges kommuniziert, auf dessen Außenseite die Flüssigkeitsfüllung im Statorraum wirkt. Der federnde Balg ist im Inneren des Rotorgehäuses im Statorraum angeordnet. Durch eine druckfest verschließbare Öffnung wird in den Statorraum eine Flüssigkeit, beispielsweise Isolieröl, eingefüllt, das den Federbalg umgibt. Die Maschine kann mit der Förderflüssigkeit, die den Rotor im Spalt umströmt, gekühlt werden.

Ferner ist in der Druckschrift DE 1 052 541 A ein gekapselter Induktionsmotor beschrieben, der als Unterwassermotor für Pumpenantriebe verwendet werden kann. Die die Stirnenden des Statorblechpakets überragenden Teile der Statorwicklung sind gemeinsam mit einem Befestigungsmittel für das Lagerschild in einer Vergussmasse, z.B. Gießharz, eingebettet. An dem Spaltrohr sind im Bereich seiner stirnseitigen Enden als Dichtungselemente Versteifungsflansche oder Ringe oder Bördelränder vorgesehen, die ebenfalls in die Vergussmasse eingebettet sind.

Aus der Druckschrift US 2 285 960 A ist eine dynamoelektrische Maschine mit einem Rotor und einem gegenüber dem Rotor gekapselten Stator bekannt. Der Stator ist mit einem Transformatoröl flüssigkeitsgekühlt.

Eine ähnliche dynamoelektrische Maschine ist auch aus dem Patent US 2.381 122 A bekannt.

Weiterhin zeigt die Druckschrift DE 896 086 C eine elektrische Maschine, insbesondere einen Generator mit hoher Drehzahl mit je einem getrennten, gasdicht abgeschlossenen Raum für den Ständer und den Läufer. Neben einem nicht brennbaren Gas kann auch ein flüssiges Kühlmittel zur Kühlung eingesetzt werden.

Auch die beiden Druckschriften US 2 687 695 A und US 3 089 969 A offenbaren elektrische Maschinen, deren Ständer gekapselt und mit einer Flüssigkeit gekühlt wird. Zum Druckausgleich in dem Ständerkühlkreislauf dient ein entsprechender Ausgleichsbehälter.

Darüber hinaus ist in der Druckschrift WO 85/00475 eine flüssigkeitsgekühlte Nochgeschwindigkeits-Synchrormaschine gezeigt. Der Stator weist Nuten für Wicklungselemente auf. Diese Nuten beherbergen auch Kühlkanäle.

Die Aufgabe der vorliegenden Erfindung besteht darin, die Kühlung einer gekapselten elektrischen Maschine zu verbessern, so dass derartige Maschinen auch in einem hohen Drehzahlbereich und mit hoher Leistung betrieben werden können.

Erfindungsgemäß wird diese Aufgabe gelöst durch eine elektrische Maschine nach Anspruch 1 mit einem Stator, einem Rotor und einer Kapselung, die den Rotor gegenüber dem Stator dicht abkapselt, wobei der Stator eine Flüssigkeitskühleinrichtung aufweist, mit der die Verlustwärme des Stators abführbar ist, und wobei die Kapselung einen Teil der Außenwand eines geschlossenen Kühlkreislaufs der Flüssigkeitskühleinrichtung bildet.

In vorteilhafter Weise ist somit eine effiziente Kühlung des Stators bzw. der Statorwicklung möglich. Somit können Maschinen mit hoher Drehzahl und hoher Leistungsklasse in gekapselter Form gebaut werden. Insbesondere können sehr kompakte Stator- bzw. Ständerwicklungen realisiert werden, die eine Luftkühlung nicht erlauben würden.

Die Kühlflüssigkeit der Flüssigkeitskühleinrichtung ist eine esterhaltige Flüssigkeit. Diese Kühlflüssigkeit besitzt die geforderten dielektrischen Eigenschaften, so dass auch Hochspannungsantriebe realisiert werden können.

Darüber hinaus ist der Rotor von einem Prozessmedium umströmt und eine Ausgleichseinrichtung zum Druckausgleich zwischen dem Prozessmedium und der Kühlflussigkeit des Stators ist in dem geschlossenen Kühlkreislauf angeordnet. Durch den Druckausgleich ergibt sich eine geringere mechanische Belastung der Kapselung bzw. des Rohres, was eine Werkstoffauswahl hinsichtlich der mechanischen und elektrischen Eigenschaften erleichtert.

Ferner weist die Ausgleichseinrichtung eine elektrische Regelung zum aktiven Druckausgleich auf. Hierdurch können Dichtigkeitsprobleme vermieden werden, die sich unter Umständen bei rein mechanischen Druckausgleichslösungen ergeben.

Darüber hinaus ist es günstig, wenn die Wickelköpfe des Stators von der Kühlflüssigkeit der Flüssigkeitskühleinrichtung direkt umströmt werden. Dies setzt eine Kühlflüssigkeit mit entsprechenden dielektrischen Anforderungen voraus und dringt eine effiziente Wärmeabfuhr vom Stator.

Entsprechend einer besonderen Ausführungsform der erfindungsgemäßen elektrischen Maschine weist ein Blechpaket des Stators axiale.Kühlbohrungen auf, die Teil des geschlossenen Kühlkreislaufs sind. Somit kann auch das Blechpaket des Stators wirksam entwärmt werden.

Ferner kann der Stator Nuten für Wicklungselemente aufweisen, in die axial verlaufende Kühlkanäle eingebracht sind, welche ebenfalls Teil des geschlossenen Kühlkreislaufs sind. Auch so kann eine wirksame Kühlung an der Statoroberfläche im Bereich der Wicklungen erzielt werden.

Günstigerweise besitzt der geschlossene Kühlkreislauf einen Rückkühler für die Kühlflüssigkeit. Ein derartiger Rückkühler trägt zur Steigerung des Kühlwirkungsgrads bei.

Der geschlossene Kühlkreislauf kann außerdem eine Pumpe umfassen, um eine Kühlströmung aufrecht zu erhalten. Auch hierdurch wird die Kühlleistung verbessert.

Eine vorteilhafte Anwendung der erfindungsgemäßen elektrischen Maschine ergibt sich bei einer Realisierung als Kompressor zur Förderung eines Prozessmediums. In diesem Fall kann der im Kompressor aufgebaute Druck auch gleichzeitig zum Pumpen des Prozessmediums durch den Rotor verwendet werden.

Die vorliegende Erfindung wird nun anhand der beigefügten Zeichnungen näher erläutert, in denen zeigen:
- FIG 1: ein Blockdiagramm der Kühlkreisläufe einer erfindungsgemäßen elektrischen Maschine und
- FIG 2: eine Schnittansicht eines erfindungsgemäß aufgebauten Kompressors.

Die nachfolgend näher geschilderten Ausführungsbeispiele stellen bevorzugte Ausführungsformen der vorliegenden Erfindung dar.

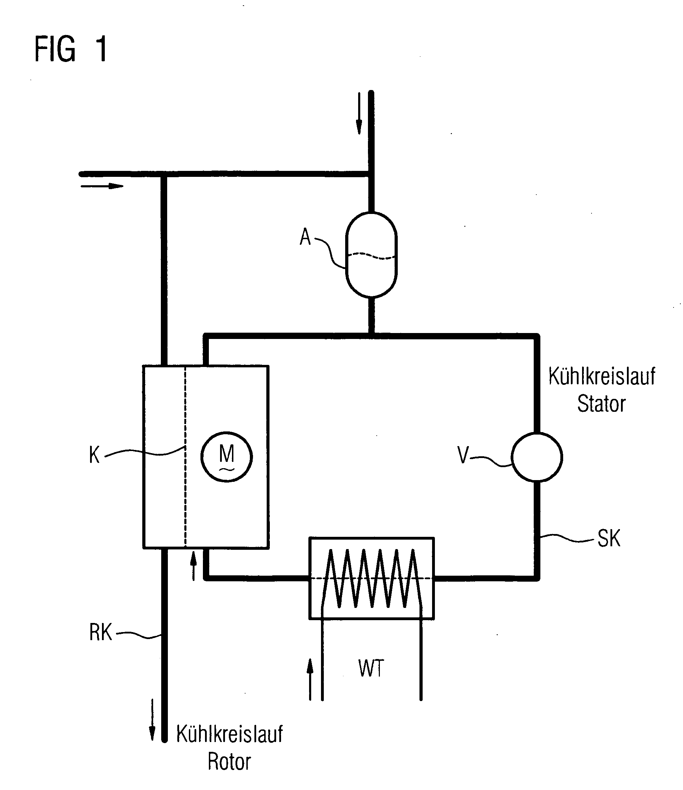

Die Prinzipskizze von FIG 1 zeit die Kühlkreisläufe einer gekapselten elektrischen Maschine. Der Motor M der elektrischen Maschine besitzt einen Rotor, der durch einen Rotorkühlkreislauf RK gekühlt wird, und einen Stator, der durch einen Statorkühlkreislauf SK gekühlt wird. In dem Spalt zwischen Rotor und Stator befindet sich eine Kapselung K. Diese Kapselung K dichtet den Rotorkühlkreislauf RK gegen den Statorkühlkreislauf SK ab. Über einen Akkumulator A erfolgt eine Drucknachführung bzw. ein Druckausgleich zwischen dem Rotorkühlkreislauf RK und dem Statorkühlkreislauf SK.

In dem vorliegenden Beispiel weist der Statorkühlkreislauf SK zur Steuerung zusätzlich ein Ventil V auf. Darüber hinaus besitzt er zur Verbesserung der Kühlung einen Wärmetauscher WT als Rückkühler.

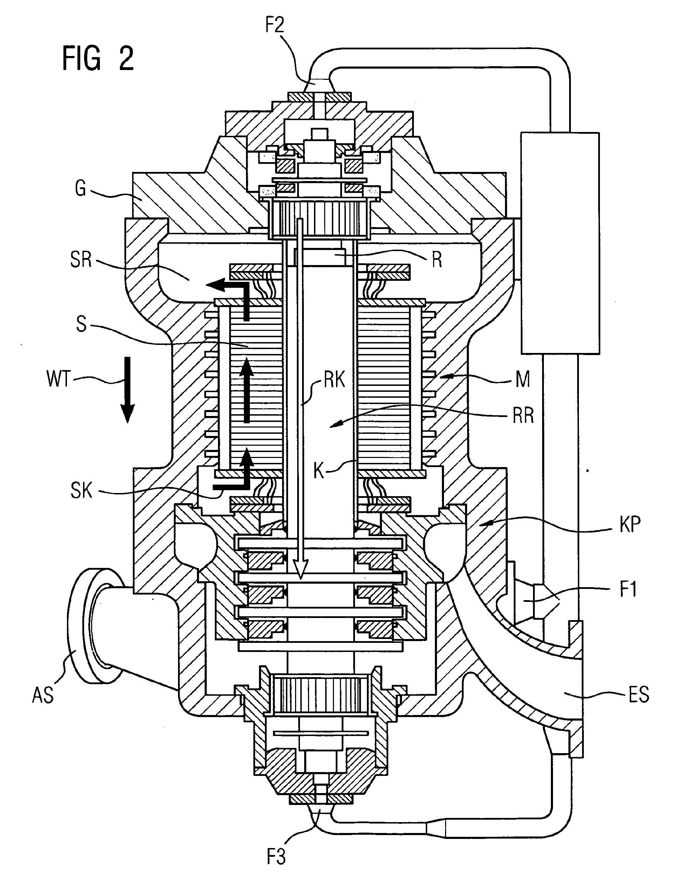

Ein konkretes Ausführungsbeispiel ist in FIG 2 wiedergegeben. Die Zeichnung zeigt einen Schnitt durch einen integrierten Kompressor. Er stellt eine elektrische Maschine dar, die in einem druckfesten Gehäuse G einen Motor M und einen Kompressor KP beinhaltet. Das Gehäuse G bildet um den Stator S des Motors M einen Statorraum SR. Zur Kühlung des Stators ist dieser Statorraum SR mit einer Kühlflüssigkeit gefüllt, die die kühltechnischen und dielektrischen Anforderungen erfüllt. Beispielsweise wird als Kühlflüssigkeit eine Isolationsflüssigkeit gewählt, die auf der Basis von Ester oder Silikonöl hergestellt ist. Damit ist eine direkte Flüssigkeitskühlung der Wicklungen und insbesondere der Wickelköpfe möglich. Diese Kühlung auf der Basis eines Fluids ermöglicht eine sehr kompakte Ständerwicklung.

In dem Ständerblechpaket sind hier zur Kühlung axiale Kühlbohrungen KB vorgesehen, die ebenfalls von der Kühlflüssigkeit des Statorraums durchströmt werden. Ebenso ist eine in der Zeichnung nicht dargestellte Kühlung der Leiter in den Nuten des Blechpakets vorgesehen, für die zwischen die Wicklungselemente in die Nuten axiale Kühlkanäle eingebracht sind. Auch diese Kühlkanäle werden von der Kühlflüssigkeit durchströmt. Auf diese Weise erfolgt eine direkte Kühlung des Nutbereichs, was beispielsweise durch Wegfall der radialen Kühlschlitze im Blechpaket zur Kompaktheit der Maschine beiträgt.

Der gesamte Statorkühlkreislauf SK ist in FIG 2 mit Pfeilen angedeutet. Er verläuft teilweise außerhalb des Gehäuses G, wie dies auch in FIG 1 angedeutet ist. Dort ist in der Zeichnung auch der Ort des Wärmetauschers WT angedeutet, der zur Rückkühlung der Kühlflüssigkeit dient. Nicht angedeutet in FIG 2 sind die Rohrleitungen eines derartigen angebauten Kühlsystems bzw. Pumpen, die die Kühlströmung aufrechterhalten.

Der Statorraum SR ist durch eine Kapselung K, hier ein Rohr, von dem Rotorraum RR abgekapselt. Die Kapselung verläuft durch den Spalt zwischen Rotor R und Stator S. Zwischen der Kapselung K und dem Rotor R fließt der Rotorkühlstrom RK in axialer Richtung der elektrischen Maschine. Durch die Auftrennung der Kühlkreisläufe für Rotor R und Stator S kann das unbehandelte Prozessmedium, das durch den Kompressor K gefördert wird, direkt zur Kühlung des Rotors R verwendet werden.

Der Kompressor KP fördert ein Prozessmedium vom Eingangsstutzen ES zum Ausgangsstutzen AS. Hierbei wird das Prozessmedium entsprechend komprimiert.

Der Kompressor KP dient auch zum Antrieb des Rotorkühlkreislaufs RK. Hierzu verlässt das Prozessmedium den Kompressorraum an einem Flansch F1 und wird über eine Rohrleitung an die motorseitige Stirnseite des Gehäuses G über eine Rohrleitung zu einem Flansch F2 geführt. Dort dringt es in das Gehäuse G ein und dient zunächst zur Kühlung des dortigen Motorlagers. Von dort strömt es weiter zum Rotor, wie dies oben bereits beschrieben wurde.

Ein Teil des Prozessmediums wird von dem Flansch F1 über Rohrleitungen an die kompressorseitige Stirnseite des Gehäuses G zu einem Flansch F3 geführt. Dort dringt dieser Teil des Kühlstroms wiederum in das Gehäuse G ein und dient dort zur Kühlung des kompressorseitigen Lagers.

Der Aufbau des Kompressors entsprechend dem Beispiel von FIG 2 führt zu einer effizienten Kühlung sowohl des Rotors als auch des Stators. Somit kann der Kompressor für hohe Drehzahlen und hohe Leistungen im MW-Bereich ausgelegt werden. Auβerdem ergibt sich durch die Konstruktion gemäß FIG 2 sowohl für den Rotor als auch für den Stator ein einfaches wartungsfreies Kühlsystem, was eine Voraussetzung für beispielsweise Unterwasseranwendungen darstellt.

## Patentansprüche

1. Elektrische Maschine mit
- einem Stator (S),
- einem Rotor (R) und
- einer Kapselung (K), die den Rotor (R) gegenüber dem Stator (S) dicht abkapselt, wobei
- der Stator (S) eine Flüssigkeitskühleinrichtung aufweist, mit der die Verlustwärme des Stators (S) abführbar ist, wobei
- die Kapselung (K) einen Teil der Außenwand eines geschlossenen Kühlkreislaufs (SK) der Flüssigkeitskühleinrichtung bildet,
**dadurch gekennzeichnet, dass**
- der Rotor (R) von einem Prozessmedium umströmt ist und eine Ausgleichseinrichtung (A) zum Druckausgleich zwischen dem Prozessmedium und der Kühlflüssigkeit des Stators (S) in dem geschlossenen Kühlkreislauf (SK) angeordnet ist,
- die Ausgleichseinrichtung (A) eine elektrische Regelung zum aktiven Druckausgleich aufweist, und
- die Kühlflüssigkeit der Flüssigkeitskühleinrichtuhg eine esterhaltige Flüssigkeit ist.

2. Elektrische Maschine nach Anspruch 1, wobei die Wickelköpfe des Stators (S) von der Kühlflüssigkeit der Flüssigkeitskühleinrichtung direkt umströmt sind.

3. Elektrische Maschine nach einem der vorhergehenden Ansprüche, wobei ein Blechpaket des Stators (S) axiale Kühlbohrungen (KB) aufweist, die Teil des geschlossenen Kühlkreislaufs (SK) sind.

4. Elektrische Maschine nach einem der vorhergehenden Ansprüche, wobei der Stator (S) Nuten für Wicklungselemente aufweist, in die axial verlaufende Kühlkanäle eingebracht sind, welche Teil des geschlossenen Kühlkreislaufs (SK) sind.

5. Elektrische Maschine nach einem der vorhergehenden Ansprüche, wobei der geschlossene Kühlkreislauf (SK) einen Rückkühler (WT) für die Kühlflüssigkeit aufweist.

6. Elektrische Maschine nach einem der vorhergehenden Ansprüche, wobei der geschlossene Kühlkreislauf (SK) eine Pumpe umfasst, um eine Kühlströmung aufrecht zu erhalten.

7. Elektrische Maschine nach einem der Ansprüche 8 bis 10, die als Kompressor (KP) zur Förderung des Prozessmediums ausgebildet ist.

## Claims

1. Electric machine comprising
- a stator (S)
- a rotor (R) and
- an encapsulation (K), which tightly encapsulates the rotor (R) from the stator (S), with
- the stator (S) having a liquid cooling facility, with which the heat losses of the stator (S) can be dissipated, with
- the casing (K) forming a part of the outer wall of a closed cooling circuit (SK) of the liquid cooling facility,
**characterised in that**
- a process medium circulates around the rotor (R) and an equalizer (A) for balancing the pressure between the process medium and the cooling liquid of the stator (S) is arranged in the closed cooling circuit (SK),
- the equalizer (A) has an electric controller for active pressure equalization, and
- the cooling liquid of the liquid cooling facility is a liquid containing ester.

2. Electric machine according to claim 1, with the cooling liquid of the liquid cooling facility directly circulating around the coil ends of the stator (S).

3. Electric machine according to one of the preceding claims, with a laminated core of the stator (S) having axial cooling holes (KB), which form part of the closed cooling circuit (SK).

4. Electric machine according to one of the preceding claims, with the stator (S) having grooves for winding elements, in which axially proceeding cooling channels are introduced, which form part of the closed cooling circuit (SK).

5. Electric machine according to one of the preceding claims, with the closed cooling circuit (SK) having a heat exchanger (WT) for the cooling liquid.

6. Electric machine according to one of the preceding claims, with the closed cooling circuit (SK) including a pump, in order to maintain a cooling flow.

7. Electric machine according to one of claims 8 to 10, which is embodied as a compressor (KP) for conveying the process medium.

## Revendications

1. Machine électrique comprenant
- un stator ( S ),
- un rotor ( R ) et
- une enceinte ( K ) qui encapsule le rotor ( R ) d'une manière étanche par rapport au stator,
- le stator ( S ) a un dispositif de refroidissement par du liquide, par lequel la chaleur perdue du stator ( S ) peut être évacuée, dans laquelle
- l'enceinte ( K ) forme une partie de la paroi extérieure d'un circuit ( SK ) fermé de refroidissement du dispositif de refroidissement par du liquide,
**caractérisé en ce que**
- le rotor ( R ) est léché par un fluide de processus et un dispositif ( A ) de compensation, pour compenser la pression entre le fluide de processus et le liquide de refroidissement du stator ( S ), est monté dans le circuit ( SK ) fermé de refroidissement,
- le dispositif ( A ) de compensation a une régulation électrique pour la compensation active de la pression, et
- le liquide de refroidissement du dispositif de refroidissement par liquide est un liquide contenant un ester.

2. Machine électrique suivant la revendication 1, dans laquelle les têtes de bobine du stator ( S ) sont léchées directement par le liquide de refroidissement du dispositif de refroidissement par du liquide.

3. Machine électrique suivant l'une des revendications précédentes, dans laquelle un paquet de tôles du stator ( S ) a des trous ( KB ) axiaux de refroidissement, qui font partie du circuit ( SK ) fermé de refroidissement.

4. Machine électrique suivant l'une des revendications précédentes, dans laquelle le stator ( S ) a des rainures pour des éléments de bobine, dans lesquels sont ménagés des canaux de refroidissement, qui s'étendent axialement et qui font partis du circuit ( SK ) fermé de refroidissement.

5. Machine électrique suivant l'une des revendications précédentes, dans laquelle le circuit ( SK ) fermé de refroidissement a un refroidisseur ( WT ) de retour du liquide de refroidissement.

6. Machine électrique suivant l'une des revendications précédentes, dans laquelle le circuit ( SK ) fermé de refroidissement comprend une pompe pour maintenir un courant de refroidissement.

7. Machine électrique suivant l'une des revendications 1 à 6, qui est constituée en compresseur ( KP ) pour véhiculer le fluide de processus.
